## Europäisches Patentamt
## European Patent Office
## Office européen des brevets

(19)

(11) Publication number: **0 102 663**
**A1**

(12) # EUROPEAN PATENT APPLICATION

(21) Application number: **83201176.1**

(22) Date of filing: **08.08.83**

(51) Int. Cl.³: **A 23 L 1/30**

(30) Priority: **10.08.82 NL 8203150**

(43) Date of publication of application:
**14.03.84 Bulletin 84/11**

(84) Designated Contracting States:
**AT BE CH DE FR GB IT LI LU NL SE**

(71) Applicant: **VAN MELLE NEDERLAND B.V.**
**Olympiaweg 10**
**NL-3077 AL Rotterdam(NL)**

(72) Inventor: **van der Eijnden, Cornelis Maria Joseph**
**Luciadonk 10**
**NL-4704 VJ Roosendaal (NB)(NL)**

(74) Representative: **van der Beek, George Frans et al,**
**Nederlandsch Octrooibureau Johan de Wittlaan 15 P.O.**
**Box 29720**
**NL-2502 LS Den Haag(NL)**

(54) Supplementary food containing vitamins and/or minerals and optionally further components and a process for producing this food.

(57) The invention relates to a supplementary food containing vitamins, minerals or further components, or a combination of them, which supplementary food components are incorporated in a base consisting of carbohydrates, water and vegetable oils. The supplementary food is especially suited for curing malnutrition and can be administered easily. The storage properties are even under tropic conditions very good. The production technology is relatively simple. The contents of minerals, vitamins and further components can be adapted to the local needs.

EP 0 102 663 A1

Croydon Printing Company Ltd.

Supplementary food containing vitamins and/or minerals and optionally further components and a process for producing this food.

The invention relates to a supplementary food containing vitamins and/or minerals and optionally further components and to a process for the production of this food.

A great part of the population of the world suffers from malnutrition, a malnutrition which is frequently not caused by a total shortness of food but by a deficient food that does not contain all required components.

In the past already on a large scale attempts have been made to combat malnutrition by the administration of supplementary food, which had been brought into a special form such as for instance mixtures, pills or biscuits.

In general six types of problems occur in a project for the administration of such supplementary food, i.e.:

a) it appeared that the bases used were not suited to incorporate the whole desired vitamin/mineral-complex, but only a part of it;

b) it appeared that the people was not prepared to take such a supplementary food in their feed pattern causing acceptation problems and even a bad influence on the feeding pattern of the population;

c) the storage properties of the supplementary food appeared to be insufficient, especially under tropic conditions;

d) the structure of the product was in many cases such that an easy handling during transport, storage and distribution was not possible;

e) the price of the product was often such that the costs per person per day could not be afforded. On many occasions it was partly caused by the high transportation costs from the production country to the threatened area, while local production appeared to be impossible due to lack of raw materials and to a technology which is too complicated;

f) it was not always possible to prove that the essential additives were indeed resorbed by the human body.

Using pills it appeared to be very difficult to guarantee a regular taking in. In a culture pattern where taking in pills is not usual, it is often forgotten after some time, omitted, taken double, etc. This caused that the trouble i.e. the malnutrition, was not cured.

It appeared that by incorporating in biscuit as a basis the relative temperatures during the production caused loss of vitamins. Further it appeared to be very difficult to neutralize the so called off tastes and to maintain a good structure, so that this type of products could not be used daily in several feeding patterns.

A review of supplementary food and their uses is given in "The contribution of new food mixtures to the releave of malnutrition, a second look", by Elizabeth Orr. It clearly appears from this article, that as yet no really satisfying supplementary food has been found.

It has now been found, that a product can be produced containing the total packet of essential vitamins and minerals and which has no off taste, that can be inserted in the feeding pattern of the local population and is accepted as such, that is eaten with a daily regularity, that can be kept for more than a year under tropic conditions, that is easily to transport, to store and to distribute, that can be produced by a relative simple technology using mainly basis materials which are locally available and from which the essential components are absorbed well by the human body, if the vitamins and/or minerals and further components, if desired, such as for instance protein, are incorporated in the basis consisting of carbohydrates, water and vegetable oils and/or fats.

The product of the invention does not disturb the local feeding pattern and adaptations of the product which are desirable in view of local conditions can be performed by simple technology and in a quick way. In this context addition of fluoride, adaptation of the amounts of the components and the addition of proteins can be considered.

In practice further components are incorporated in the product for up to 50%.

The composition of the product can be adjusted in accordance with the desired percentages of for instance the so called "Recommended Dietary Allowance (RDA)" as given by the Food and Nutrition Board, National Research Council, National Academy of Sciences, Washington, for children of 6 - 12 years. This will of course be performed in practice unless a different composition is desired.

A specially suited composition of the supplementary food according to the invention is 1.8 - 2.2 g of protein, 1500 - 1800 I.U.of vitamin A, 145 - 175 I.U. of vitamin D3, 5 - 7 I.U. of vitamin E, 11 - 13 mg of vitamin C, 0.5 -0.7 mg of vitamin B1, 0.85 - 1.5 mg of vitamin B2, 0.65 - 0.85 mg of vitamin B6, 1.0 - 1.4 microgram of vitamin B12, 90 - 100 microgram of folic acid, 5.0 - 6.0 mg of niacin, 1.6 - 2.0 mg of pantothenic acid, 225 - 275 mg of calcium, 225 - 275 mg of phosphorus, 60 - 70 microgram of iodine and 3.5 - 4.5 mg of iron. Such a composition can for instance be the following whereby (the percentages indicated are of the above RDA) 1650 I.U. of vitamin A (50%), 160 I.U. of vitamin D3 (40%), 6 I.U. of vitamin E (60%), 12 mg of vitamin C (30%), 0.6 mg of vitamin B1 (50%), 0.95 mg vitamin B2 (80%), 0.75 mg of vitamin B6 (65%), 1.2 microgram of vitamin B12 (60%), 100 microgram of folic acid (35%), 5.5 mg of niacin (35%), 1.8 mg of pantothenic acid (30%), 250 mg of calcium (30%), 250 mg of phosphorus (30%), 65 microgram of iodine (60%) and 4 mg of iron (40%).

The product of the invention can be produced expediently by boiling together sugar syrup, vegetable oil and/or fat upto a final moisture content of 7.5 - 8.5 percent by weight, subsequently cooled off to a temperature of not more than 70°C, drawing in the additives in the mixture, kneading it during 10 - 15 minutes, cooling to 30°C and if desired forming and packing it.

The packing can be performed in any way, however, especially expedient is to pack the product by means of a so called "flow-pack" system in which the product is sufficiently secluded from influences of moisture and light from the outside by an aluminum laminate. A number of said packing units can be bundled together and wrapped in polypropylene.

The basis consisting of carbohydrates and vegetable oils appears to be a good carrier for vitamins and minerals and to get the long-lasting life time. The final product can be stored without a considerable decrease of properties during at least a year under tropic conditions.

When a "flow-pack" consisting of aluminum laminate and surlincoating is used the product is secluded from the surrounding such that factors as humidity and gases cannot exert any influence on it.

The product obtained can for instance be packed with 6 blocks in a "flow-pack" making it possible to pack the daily dose for one person in a "flow-pack".

It is preferred that the basis contains 5 - 10 percent by weight of vegetable oils and/or fats and the basis contains not more than 10 percent by weight of water. Further an improvement of the chewing properties can be obtained by incorporating binders, such as for instance Arabic gum and gelatin in an amount of upto 5 percent by weight.

Due to the processing at a relatively low temperature the decrease of the vitamin contents occurring at higher temperature is eviated. The basis consisting of carbohydrates, water, vegetable oils and/or fats appears to be a good carrier for vitamins and minerals and to guarantee a long life time.

It further appears that the product of the invention is also good absorbed by humans, resulting in a good absorption of the vitamins and minerals.

The supplementary food of the invention can contain a high contents of the full complex of vitamins and/or minerals, retaining the good taste. Up to now this was not possible by for instance cookies because they soon exhibit a sandy or salt taste, which is often caused by minerals.

Also the vitamin B-complex which is known to cause a disagreable taste in many occasions can be incorporated without problems.

The latter is especially enabled by a good choice of the flavours with a masking activity for the off-taste of several vitamins and minerals on the one hand and on the other hand by adjustment at a certain pH for the currency of the product as such and especially the tenability of the vitamins.

During storage experiment it appeared that after a storage of one year under tropic conditions the vitamins remained in the product for an average of 80%.

An experiment involving the administration to 200 school going children in a tropic country which were divided in five groups was performed. During three months said children were administrated a supplementarty feed of the invention containing 1.8 g of protein, 1650 I.U. of vitamin A, 160 I.U. of vitamin D3, 6 I.U. of vitamin E, 12 mg of vitamin C, 0.6 mg of vitamin B1, 0.95 mg of vitamin B2, 0.75 mg of vitamin B6, 1.2 microgram of vitamin B12, 100 microgram of folic acid, 5.5 mg of niacin, 1.8 mg of pantothenic acid, 250 g of calcium, 250 mg of phosphorus, 65 microgram of iodine and 4 mg of iron.

After three months the groups were evaluated whereafter it appeared that an improvement of the nutrition state and the general condition of the children were obtained. The presence of anaemia caused by malnutrition was lowered and the blood iron contents was considerably increased. A small administrated amount of protein of about 2 g a day resulted in a distinct improvement of the nutrition state. A very clear improvement was obtained with respect to the shortnesses of vitamin B1, B2 and B6 occurring generally in said locus.

A statistically significant improvement of the blood contents of vitamins A, E, C and folic acid was obtained.

The calcium and phosphorus contents of the blood plasma which was low at the start was after a supplementary administration of three months practically normal.

The protein status was marginal and was clearly improved after the administration of the product of the invention.

Also after a longer period the acceptation was good and no resistance against the administration of the supplementary food occurred.

Of course the food of the invention can be adapted according to local needs: in places were there is a lack of fluorine, fluorine can be incorporated.

Furthermore it is possible to use for the feed components both in water and in oil soluble vitamins and food components.

Also flavours can be added in a desired rate; examples thereof are banana, chocolate, pinha collada, coconut and peanut.

To distinguish several compositions, it is also possible to incorporate dying agents which are acceptable for feed products. Examples of such dying agents are β-carotin, camthaxantin, beet red.

6

There is a great choice of additive vegetable oils and/or fats that can be used. Coco fat and palmpit fat are mentioned for instance. Examples of binders are Arabic gum and gelatin.

Example I.

A starting mixture consisting of saccharose (42 % by weight) glucose syrup (42 % by weight), hydrogenated coco fat (8 % by weight), Arabic gum (1 % by weight) and water ( 7 % by weight) was fed into a boiler.

The above mentioned mass was throroughly mixed and boiled to 123 - 125°C, resulting in a residual moisture contents of 7 % by weight. The boiled mass was subsequently cooled to a temperature of not above 70°C.

4.5 g of a vitamin mixture consisting in addition to the carrier of vitamin A (66.000 I.U./kg), 6400 I.U./kg of vitamin D3, 240 I.U./kg of vitamin E, 480 mg of vitamin C per kg, 24 mg of vitamin B1 per kg, 39 mg of vitamin B2 per kg, 30 mg of vitamin B6 per kg, 48 microgram of vitamin B12 per kg, 4 mg of folic acid, 220 mg of niacin per kg and 72 mg of pantothenic acid per kg were added to 1000 g of the obtained cooled mass. This mixture was thoroughly mixed.

The mass obtained was agitated during 15 minutes in a so called drawing vessel. This resulted in a optimum distribution and a good crystallization grade.

The mass was subsequently cooled in 10 to 20 minutes to about 45°C, resulting in a stable mass in which the components are very well distributed.

The mass obtained was subsequently formed according to a known method into blocks of 6 g.

The product obtained was packed per 6 blocks in a so called flow pack consisting of aluminum laminate with a surlin coating, so that the product was secluded from environmental factors such as humidity and gases.

Example II.

The process of example I was carried out in such a way that in addition to the vitamins mentioned in that example a mixture of minerals consisting of calcium (10 g per kg), phosphorus ( 10 g per kg), iodine (2.600 mg per kg) and iron (160 mg per kg) was added too. This was processed in a manner as described in example I on the understanding, that in stead of a drawing vessel a continuously working drawing apparatus was used. Also here an optimum distribution and a good crystallization grade was obtained. It was also found that the product has favourable properties and a good taste.

Example III.

The process of example I was followed on the understanding that in addition to the vitamins the minerals as described in example II and sodium fluoride in an amount of 60 mg/kg were added.

The storage quality of the product obtained was very good and the product showed a good taste.

Example IV.

The process of example III was followed on the understanding that in stead of sodium fluoride 90 g of protein in the form of dried chicken protein was added.

Also in this way a product with a good taste and good storage properties was obtained.

Example V.

The process of example IV was followed on the understanding, that in stead of dried chicken protein 90 g of calciumcaseinate was added. The same good properties were obtained

Example VI.

The process as described in example IV was followed on the understanding that in stead of dried chicken protein 90 g of soya isolate were added. This also resulted into the same properties.

Examples VII-IX.

The process as described in example II was followed on the understanding that an amount of flavour was added the pH being adapted to the additional flavour.

In example VII 1.5 g/kg of citrus flavour were added and the pH of the final product was adjusted at 3.2.

In example VIII 2 g/kg of red fruit flavour was added and the pH was adjusted at 4.5.

In example IX 1.3 g/kg cream flavour were added and the pH was adjusted at 5.6.

As a result of a test concerning the keeping qualities whereby the products obtained were stored under both tropial conditions (climate-case-conditions of 30°C and a relative humidity of 70%, and

8

20°C respectively and at a relative humidity of 80%), and under normal environmental conditions it appeared that at a higher pH the storage quality increases.

The pH whereby the several vitamins maintain their optimum activity varies, however it was found that a pH of 5.2 to 5.8 is the optimum for the mixture of vitamins used.

It appeared that the choice of the flavour to be used in the above mentioned pH-range is very important in view of negative influences on the taste of the vitamins and minerals added, especially in view of the disagreable taste influences of the vitamin B1 (thiamine).

It appeared that cream flavour exhibits an optimum masking of these negative influences of taste and give a very favourable taste to the total product.

Example X.

The process of example I was followed, however, the production was not performed with a drawing vessel or a continuous drawing apparatus, but by means of a continuous beating apparatus. The use of this continuous beating apparatus resulted in an improved crystallization and in an improved cell structure, however the occurrence of higher velocities caused an increase of temperature ( by higher and increasing friction forces), which had a negative influence on certain vitamins in the product and also on the product as such.

It is hereby noticed, that the continuous beating apparatus used is only operable at a low viscocity of the mass by which the temperature of addition of the mass to be beaten should be kept at about 90°C. This relatively high temperature exhibited a detrimental influence on the stability of the vitamin mixture.

0102663

## CLAIMS.

1. Supplementary food containing vitamins and/or minerals and optionally further components, characterized in that the minerals and/or vitamins and optionally further components are incorporated in a base consisting of carbohydrates, water and vegetable oils.

2. Supplementary food according to claim 1, characterized in that the vitamins and/or minerals and optionally further components amount upto 50% by weight of the supplementary food.

3. Supplementary food according to claim 1 or 2, characterized in that this food also contains protein.

4. Supplementary food according to claims 1-3, characterized in that it contains at least 1.8-2.2 g of protein, 1500-1800 I.U. of vitamin A, 145-175 I.U. vitamin D3, 5-7 I.U. vitamin E, 11-13 mg vitamin C, 0.5-0.7 mg of vitamin B1, 0.85-1.05 mg of vitamin B2, 0.65-0.85 mg of vitamin B6, 1.0-1.4 microgram of vitamin B12, 90-110 microgram of folic acid, 5.0-6.0 mg of niacin, 1.6-2.0 mg of pantothenic acid, 225-275 mg calcium, 225-275 mg phosphorus, 60-70 microgram of iodine and 3.5-4.5 mg of iron.

5. A process for the manufacture of a product according to claims 1-4, characterized by boiling together sugar syrup, vegetable oil and/or fat to a remaining moisture contents of 7.5 - 8.5% by weight, cooling said mass to a temperature upto 70°C, drawing the components to be mixed through the mixture, kneading during 10 - 15 minutes, cooling to 30°C and optionally forming the mass obtained and packing it.

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 038 157 (Y. SAIKI) <br> * Claims 1-44; examples 1,3 * | 1-3,5 | A 23 L 1/30 |
| A | | 4 | |
| A | US-A-3 558 323 (M.A. CANNALONGA et al.) <br> * Claims 1-11; examples 1-4; column 2, lines 20-32; column 4, lines 37-69; columns 5-45 * | 1-5 | |
| A | DE-A-1 517 044 (HOFFMANN-LA ROCHE) <br> * Claims 1,3,5; example 5 * | 1-5 | |
| A | CH-A- 370 631 (H. VOGLER) <br> * Claims; page 1, lines 56-66 * | 1-5 | TECHNICAL FIELDS SEARCHED (Int Cl ³) |
| A | CH-A- 397 401 (J. ROSSI) <br> * Claims; page 1, line 60 - page 2, line 25 * | 1-5 | A 23 L |
| A | GB-A-1 358 401 (VITAMINS) <br> * Claims * | 1-5 | |
| A | FR-A-2 353 234 (KABUSHIKI) | 1 | |

--- -/-

The present search report has been drawn up for all claims

| Place of search <br> THE HAGUE | Date of completion of the search <br> 15-11-1983 | Examiner <br> VAN MOER A.M.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int Cl ³) |
|---|---|---|---|
| A | US-A-3 950 545 (J.R. HAYWARD et al.) <br> * Claims 1-20 * | 1 | |

-----

TECHNICAL FIELDS
SEARCHED (Int Cl ³)

The present search report has been drawn up for all claims

| Place of search <br> THE HAGUE | Date of completion of the search <br> 15-11-1983 | Examiner <br> VAN MOER A.M.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82